Europäisches Patentamt

European Patent Office

Office européen des brevets

(11) Publication number: **0 347 049**
**A2**

## EUROPEAN PATENT APPLICATION

(21) Application number: 89305239.9

(51) Int. Cl.⁴ **C08J 5/12 , C08L 85/00**

(22) Date of filing: **24.05.89**

(30) Priority: **15.06.88 US 207480**

(43) Date of publication of application:
**20.12.89 Bulletin 89/51**

(84) Designated Contracting States:
**BE DE FR GB**

(71) Applicant: **DOW CORNING CORPORATION**
**3901 S. Saginaw Road**
**Midland Michigan 48686-0994(US)**

(72) Inventor: **Kamis, Russell Peter**
**5220 Hedgewood Apt. 1009**
**Midland Michigan(US)**

(74) Representative: **Laredo, Jack Joseph et al**
**Elkington and Fife Beacon House 113**
**Kingsway**
**London, WC2B 6PP(GB)**

(54) Improved primer compositions.

(57) The adhesion between a cured silicone elastomer and an inorganic substrate such as glass or metal achieved using primer compositions comprising a solution of an alkyl orthosilicate and a tetraalkyl titanate in an organic liquid is improved when the organic liquid contains from 2 to 25 percent by weight, based on the weight of the primer composition, of an aliphatic or ethylenically unsaturated alcohol containing from 4 to 20 carbon atoms.

## IMPROVED PRIMER COMPOSITIONS

Primer compositions for improving the adhesion of organosiloxane resins and elastomers to a variety of organic and inorganic substrates are known in the art. One class of primer compositions used for this purpose comprises an orthosilicate containing four alkoxy or alkoxyalkyl radicals bonded to silicon, a tetraalkyltitanate such as tetra-n-butyl titanate and a suitable solvent for both of these ingredients.

A shortcoming of many primer compositions is the need to thoroughly clean the substrate, apply the primer as a thin layer and allow this layer to dry under specified conditions of time, temperature and humidity before applying a curable organosiloxane composition. While these conditions may be readily achieved in the controlled environment of a laboratory, they may not exist at the locations where sealants and other organosiloxane compositions are applied, for example, at a construction site. In these environments, the probability of achieving the relatively thin coating and drying conditions required to reproducibly obtain adhesion is typically relatively low.

When sheets of plate glass are used as the exterior walls of buildings and other structures the glass is typically secured by means of an adhesive to mullions or other metallic members that are, in turn, secured to the frame of the building. Silicone rubber sealants are widely used adhesives for this purpose. In this application, it is critical that the adhesive bond between the glass and the metallic member to which it is attached not fail when exposed to extremes of temperature and humidity.

One objective of this invention is to provide primer compositions capable of reproducibly providing excellent adhesion between a variety of substrates and cured silicone rubber, irrespective of the manner in which the primer is applied.

Excellent adhesion between a substrate and a cured silicone rubber composition is reproducibly achieved by coating the substrate with a primer composition comprising a tetraalkyl titanate, at least one alkyl orthosilicate and/or alkoxyalkyl orthosilicate and a hydrocarbon solvent when the solvent portion includes a monohydric alcohol containing between 4 and 20 carbon atoms. The alcohol constitutes from 2 to 25 percent by weight of the primer composition.

This invention provides an improved composition comprising

(I) from 2 to 10 percent by weight of a tetraalkyl titanate of the formula $Ti(OR)_4$ or a mixture of at least two tetraalkyl titanates corresponding to said formula, where R represents an alkyl radical containing from 1 to 12 carbon atoms,

(II) from 2 to 20 percent by weight of an orthosilicate of the general formula $Si(OR')_4$ or a mixture of two or more orthosilicates corresponding to said general formula, where R' is selected from the group consisting of R and alkoxyalkyl radicals containing from 2 to 12 carbon atoms, and

(III) from 70 to 96 percent, based on the weight of said composition, of a non-reactive organic solvent, where the improvement comprises the presence in said solvent of from 2 to 25 weight percent, based on the weight of said composition, of an alcohol represented by the formula $R''OH$, where $R''$ represents an alkyl or an alkenyl radical containing from 4 to 20 carbon atoms.

The inventive feature of the present compositions is the presence of from 2 to about 25 percent, preferably from 5 to about 20 percent, based on the weight of the primer composition, of a monohydric alcohol containing from 4 to 20 carbon atoms. The alcohol is present as a portion of the solvent for the reactive ingredients of the primer compositions. Even though at least a portion of the alcohol evaporates together with the other solvents for the primer, which constitute from 70 to 96 weight percent of the primer composition, the presence of the one or more of the present alcohols in the initial composition maintains the adhesion imparted by the primer, particularly when the bond between the substrate to which the primer is applied and the overlying layer of cured silicone rubber is immersed in water for several days.

The alcohol portion of the primer composition can be represented by the formula $R''OH$, where $R''$ represents an alkyl or alkenyl radical containing from 4 to 20 carbon atoms. The carbon atoms constituting $R''$ can be in a linear or branched configuration. When $R''$ represents an alkyl radical it can be, for example, butyl, hexyl, octyl or stearyl. Alkenyl radicals represented by $R''$ include but are not limited to 3-methyl-1-butenyl and oleyl (9-octadecenyl). N-butyl alcohol is a preferred alcohol, based on its efficacy, availability and cost.

The present alcohols constitute a portion of the solvent for the primer composition, which also includes at least one additional liquid organic compound. Suitable organic compounds include hydrocarbons such as hexane, heptane, toluene, xylene and commercially available mixtures of hydrocarbons identified as various grades of "naphtha" and ketones. Mixtures of two or more classes of organic liquids can be present.

Specific nonreactive organic solvents useful in the present primer composition in addition to the alcohols corresponding to the foregoing formula $R''OH$ include, but are not limited to, naphtha, toluene, heptane, methylisobutyl ketone, butyl acetate and xylene. Other mineral spirits can be present, as can vegetable oils, such as linseed oil.

The choice of a particular organic liquid or mixture of such liquids as solvents for the primer will depend upon a number of factors. First, the volatility of the solvent is dependent upon the particular application requirements of the primer. While in general, solvents which are more volatile are preferred in that they allow for shorter drying periods, less volatile solvents may be used in certain instances because of lower costs or other considerations. Another factor involved in the choice of solvent is the wettability of the primer composition, i.e., the ability of the composition to form a coherent film on the surface of the substrate. It is well understood in the art that wetability depends upon factors such as the surface energy of the surface being primed and the surface tension of the solvent.

One of the non-volatile, reactive ingredients of the present primer compositions is a tetraalkyltitanate of the general formula $Ti(OR)_4$, where R represents an alkyl radical containing from 1 to about 12 carbon atoms, preferably 3 or 4 carbon atoms. Typical operable titanates include, but are not limited to, tetrabutyl titanate, tetrapropyl titanate and tetrahexyl titanate. The titanate constitutes from 2 to about 10 percent by weight of the primer composition.

The second required non-volatile reactant in the primer composition is an alkyl orthosilicate or an alkoxy-alkyl orthosilicate of the general formula
$(R'O)_4Si$
where each $R'$ independently represents an alkyl radical containing from 1 to 12 carbon atoms or an alkoxyalkyl radical containing from 2 to 12 carbon atoms. $R'$ preferably represents alkyl and/or alkoxyalkyl containing from 1 to 4 carbon atoms.

Specific orthosilicates useful in the present primer compositions include, but are not limited to ethyl orthosilicate, methyl orthosilicate, n-propyl orthosilicate, butyl orthosilicate, octyl orthosilicate, 2-methoxyethyl orthosilicate and 1-methoxypropyl-2-orthosilicate. Mixtures containing two or more orthosilicates corresponding to foregoing formula can be present in the primer composition. Preferred mixtures include about equal parts of ethyl orthosilicate and either 2-methoxyethyl orthosilicate or 1-methoxypropyl-2-orthosilicate.

The orthosilicate ingredient constitutes from 2 to about 20 percent by weight of the primer composition, preferably from about 5 to about 15 percent by weight.

Preferred compositions contain about 5 percent by weight of the organotitanate and a total of about 10 percent by weight of one or more orthosilicates.

In addition to the two aforementioned reactive ingredients and solvent, the primer composition can also contain other ingredients, such as a catalyst to promote curing of the reactive ingredients in the primer and pigments or dyes for determining whether a substrate has been properly coated with the primer composition.

The present primer compositions promote strong adhesion of cured silicone silicone rubber to a variety of inorganic substrates and organic coatings. The strength of this adhesive bond typically exceeds the strength of the silicone rubber. When sufficient force is applied in an attempt to peel the silicone rubber from the substrate the rubber layer ruptures, leaving a layer of rubber bonded to the substrate.

Substrates to which the primer compositions of this invention can be applied include glass, metals such as aluminum, anodized aluminum, steel, copper and metals that have been coated with paints wherein the film-forming ingredient is an organic polymer such as an ester of acrylic and methacrylic acid that can be used alone or in combination with a fluorinated polymer such as polyvinylidene fluoride. The paint also typically includes at least one metallic or mineral pigment and a solvent.

Any of the known liquid or gum types of curable silicone rubber compositions can be bonded to the aforementioned substrates using the present primers, so long as the ingredients of the primer do not interfere with curing of the rubber. Silicone rubber compositions can be cured in a variety of ways, including by reacting with free radicals generated by the heat-induced decomposition of an organic peroxide, by the platinum-catalyzed reaction of organosilicon compounds containing at least two ethylenically unsaturated hydrocarbon radicals per molecule with compounds containing a plurality of silicon bonded hydrogen atoms and the reaction of hydroxyl terminated polydiorganosiloxanes with silanes containing at least three hydrolyzable groups per molecule. The latter reaction typically occurs in the presence of atmospheric moisture and a suitable catalyst. Preferably, the curable silicone rubber composition is in the form of an extrudable sealant that cures in the presence of atmospheric moisture by the reaction of (1) a hydrocarbyl-trialkoxysilane such as methyltrimethoyxysilane or an alkyl- or alkoxyalkyl orthosilicate such as methyl orthosilicate with (2) a hydroxyl-terminated polydiorganosiloxane in the presence of a organotitanante or other suitable catalyst.

3

As discussed hereinbefore, the unique feature of the present primer compositions is their ability to promote formation of strong adhesive bonds between the substrate to which they are applied and an overlying layer of cured silicone rubber, irrespective of the manner in which the primer is applied to the substrate and/or the amount of time the primer is allowed to dry prior to application of the curable silicone rubber composition. This is completely contrary to presently accepted teaching regarding suitable techniques for applying primers. Moreover, the strength of the adhesive bond between substrate, primer and cured silicone rubber is not adversely affected when the rubber-coated substrate is immersed in water for a week or more.

The following examples disclose preferred embodiments of the present primer compositions, substrates and curable silicone rubber compositions. The examples should not be interpreted as limiting the scope of the present invention as defined in the accompanying claims.

Example 1

This example demonstrates the ability of the present primer compositions to cohesively bond a silicone rubber sealant to both glass and anodized aluminum substrates. The strength of the initial bond is not adversely affected by immersion in water. Furthermore, this bonding is achieved using an excess of primer rather than the recommended procedure of wiping on a layer of primer having a thickness of less than about 0.1 mm in thickness. This example also demonstrates the adverse effects of deleting the alcohol from the primer composition.

The substrates were panels of plate glass, aluminum (Alclad(R) 2024), anodized aluminum (bronze type), aluminum coated with two polyvinylidene fluoride/acrylate based paint compositions available as Duranar(R) - white and Duranar(R) XL - silver. The panels measured 7.6 cm.in width and 15.2 cm. in length.

Prior to being coated with the primer composition the glass panels were wiped with a 1:1 weight ratio isopropanol/water mixture and the aluminum and Duranar-coated panels were wiped with xylene. The panels were then allowed to air dry prior to being coated.

The primer compositions were prepared by blending the following ingredients together in the order listed.

85 parts of VM&P naphtha, a commercially available mixture of liquid hydrocarbons boiling from about 40 to about $140°$ C.

5 parts of n-propyl orthosilicate

5 parts of 2-methoxyethyl orthosilicate

5 parts of tetra n-butyl titanate (TBT)

0.05 parts of Rhodamine "B" dye

from 0 to 25 percent by weight, based on the weight of the primer composition, of n-butanol.

Using a medicine dropper, a continuous bead of primer composition was applied along the entire length of the central portion on one surface of each substrate and allowed to flow out over the surface of the substrate. This is contrary to the recommended procedure for applying the primer, which specifies that the primer be applied by wiping on a film less than about 0.1 mm. in thickness.

The primer was allowed to dry under ambient conditions for one hour, at which time a layer of uncured silicone rubber sealant measuring 1.3 cm. in width and 0.64 cm. in depth was applied along the entire length of the substrate. The sealant exhibited the following composition, expressed in parts by weight:

30 parts of a hydroxyl terminated polydimethylsiloxane exhibiting a viscosity of 50 Pa•s and containing 0.06 weight percent of hydroxyl groups,

53 parts of calcium carbonate that had been treated with calcium stearate,

9 parts of a trimethylsiloxy-terminated polydimethylsiloxane exhibiting a viscosity of 0.1 Pa•s at $25°$ C.,

4 parts of fume silica,

1 part of a hydroxyl endblocked polymethylphenylsiloxane having a viscosity of about 0.5 Pa•s at $25°$ C. and containing about 4.5 weight percent of silicon-bonded hydroxyl groups,

1.9 parts of methyltrimethoxysilane,

0.6 part of a chelated titanium compound,

0.1 part of aminotrimethoxysilane, and

0.06 part of Williams 1011 Lamp Black

A strip of 30 mesh aluminum screening measuring 1.3 cm. in width and about 33 cm. in length was cleaned with methyl isobutyl ketone, rinsed with acetone and allowed to air dry. The strip of screening was then placed on the layer of sealant with its longitudinal axis parallel to the longitudinal axis of the sealant layer. The screening was then pressed into the sealant until the sealant penetrated through the holes of the screen. A second layer of sealant was then applied over the first layer in an amount sufficient to increase the total thickness of the sealant layer to about 2 mm.

The edges of the sealant layer parallel to its longitudinal axis were then trimmed to conform these edges to the edges of the screening. About an 18 cm. long strip of uncoated screening projected from one end of laminate to serve as the point of attachment for the device subsequently used to peel the laminate from the substrate.

After curing for one day at a temperature of 23°C. and 50% relative humidity, the two edges of the sealant layer parallel to the longitudinal axis of the substrate were cut to expose the metal or glass substrate and thereby form a 2.5 cm. wide strip of cured sealant. The edge of the laminate from which the free end of the screening projected was then undercut for a distance of 0.5 cm. parallel to the longitudinal axis of the substrate to expose the underlying substrate.

The adhesion of the sealant layer to the substrate was then determined by securing the substrate between the fixed set of jaws of a tensile testing device and the free end of the screening between the movable set of jaws. The two sets of jaws were then moved apart to peel away the sealant layer from the substrate at an angle of 180 degrees for a distance of about 2.50 cm. as specified in ASTM test procedure C-794-80. The freshly exposed substrate surface was then examined to determine the percent of this surface to which sealant had adhered. The results of these determinations are recorded in the following tables as "percent cohesive failure".

Following this initial test the coated substrates were exposed for an additional 7 days to a temperature of 23°C. and a relative humidity of 50%, at which time the strips of sealant were again undercut for a distance of 0.5 cm. in the same manner and the adhesion test repeated. The resistance of the primer to hydrolysis in the presence of water was determined by soaking the sample in 23°C. water for one day, evaluating the sample for percent cohesive failure as described in the preceding paragraph, soaking the sample in 23°C. water for an additional six days and repeating the adhesion test.

The results of the adhesion tests are summarized in the following Table 1.

TABLE 1

| Percent Cohesive Failure | | | | |
|---|---|---|---|---|
| Wt. % | 7 Days | 14 Days | 1 Day | 7 Days |
| Butanol | 30% R.H. | 30% R.H. | Water | Water |
| Glass/Aluminum/Anodized Aluminum | | | | |
| 0 | 100/100/100 | 80/100/100 | 20/100/100 | 0/60/30 |
| 5 | 100/100/100 | 100/100/100 | 100/100/100 | 100/100/100 |
| 20 | 100/100/100 | 100/100/100 | 100/100/100 | 100/100/100 |
| 25 | 100/100/0 | 100/100/100 | 100/100/100 | 100/100/50 |
| Percent Cohesive Failure | | | | |
| Weight % | 7 Days | 14 Days | 1 Day | 7 Days |
| Butanol | 30% R.H. | 30% R.H. | Water | Water |
| Duranar/Duranar XL | | | | |
| 0 | 100/100 | 100/100 | 85/100 | 0/0 |
| 5 | 100/100 | 100/100 | 100/100 | 100/100 |
| 25 | 100/100 | 100/100 | 70/100 | 100/100 |

These data demonstrate the ability of n-butanol to promote strong adhesion of a cured silicone rubber sealant to both glass, aluminum and coated aluminum in the presence of water and the decease in adhesion to anodized aluminum and coated aluminum when the concentration of butanol exceeds about 25 percent by weight.

Example 2

This example demonstrates the criticality of the present concentration range of from 2 to 25 weight percent for the alcohol in the primer compositions of this invention.

The primer composition described in the preceding Example 1 was modified by replacing 50 or 100 percent of the solvent, VM&P naphtha, with an equal weight of n-butanol. These two primer compositions and the unmodified primer composition of Example 1 that did not contain any butanol were applied to panels of anodized aluminum as described in Example 1 and allowed to dry for one hour, after which the panels were coated with sealant and tested for adhesion as described in Example 1. The panels were cleaned with xylene prior to being coated with one of the three primer compositions. The percentage of cohesive failure observed for each of the samples is recorded in the following Table 2.

Table 2

| Percent Cohesive Failure On Anodized Aluminum | | | | | |
|---|---|---|---|---|---|
| Weight % | Weight % | 7 Days | 14 Days | 1 day | 7 Days |
| Butanol | Naphtha | 30% R.H. | 30% R.H | Water | Water |
| 0 | 85 | 100 | 100 | 0 | 0 |
| 42.5 | 42.5 | 100 | 10 | 0 | 0 |
| 85.0 | 0 | 20 | 100 | 0 | 0 |

Example 3

This example demonstrates that the ability to retain adhesion in the presence of moisture is unique to primer compositions containing primary, secondary and tertiary alcohols containing from 4 to 20 carbon atoms as part of the solvent for the primer compositions.

Each of the alcohols listed in the following Table 3 was added individually to the primer composition of Example 1 in place of butanol. The final compositions contained 10 percent by weight of the alcohol. Following the procedure described in Example 1 anodized aluminum panels were cleaned with xylene, coated with the diluted primer composition and allowed to dry for one hour, after which the sealant composition and screen were applied, the sealant cured and the composite tested for cohesive failure.

The alcohols evaluated and the percent cohesive failure exhibited following immersion in water for 1 and 7 days are recorded in Table 3.

## Table 3

### Percent Cohesive Failure (Anodized Aluminum)

| Type of Alcohol | 1 day Water | 7 Days Water |
|---|---|---|
| **Controls** | | |
| n-Propanol | 95-100 | 40 |
| iso-Propanol | 0 | 0 |
| **Present Invention** | | |
| t-Butanol | | |
| 3-Methyl-1-butene-3-ol | | |
| Hexanol | | |
| n-Octanol | | |
| Decyl Alcohol | | |
| Stearyl Alcohol | | |
| Oleyl Alcohol | | |

All seven of the primer compositions of the present invention imparted 100% cohesive failure following immersion in water for one and seven days and formed a smooth, coherent film when applied to the aluminum panel.

The data in Table 3 demonstrate that both saturated and ethylenically unsaturated monohydric alcohols containing from 4 to 18 carbon can be used to replace a portion of the conventional hydrocarbon solvents in primer compositions comprising a tetraalkyl titanate and an alkyl- or alkoxyalkyl orthosilicate.

Primers containing 10 percent by weight of ethylene glycol, 2-amino-2-methylpropanol or benzyl alcohol as the alcohol portion did not "wet" the surface of the substrate, i.e. the primer did not form a coherent film, but instead collected in numerous small puddles on the substrate, making the composition unsuitable for use as a primer.

## Example 4

This example demonstrates the ability of the present primer compositions to promote adhesion of a silicone rubber sealant to primed substrates that have been sprayed with water. One of the basic requirements for prior art primer compositions is that the primer layer be clean and dry prior to application of the material to be adhered to the substrate.

A primer composition containing 10 weight percent of butanol was prepared as described in Example 1. The primer was applied to two groups of glass, aluminum, anodized aluminum and coated aluminum

7

panels. The coating on the aluminum panels was the silver pigmented polyvinylidene fluoride/acrylate based paint composition referred to in Example 1 as Duranar(R) XL. All of the glass panels were cleaned with a 1:1 weight ratio mixture of water/isopropanol and both the aluminum and Duranar-coated panels were wiped with xylene. All of the panels were allowed to dry before the primer was applied.

The primer was applied using the technique described in Example 1 and allowed to dry for one hour. One group of primed panels was sprayed with water on the primed side, following which a silicone rubber sealant composition was applied to the wet surface and allowed to cure. The composition of the sealant together with the methods used to prepare and evaluate the coated composite are described in Example 1. A second group of identical panels were not sprayed with water prior to application of the sealant composition.

All of the panels evaluated exhibited 100% cohesive failure of the sealant layer under all of the test conditions.

Example 5

This example demonstrates the unique ability of the present primer compositions to provide adhesion between a silicone rubber sealant and various substrates irrespective of the time interval between application of the primer and the sealant. Typically, this time interval is critical for achieving adequate adhesion between a substrate and the coating applied over the primer.

The two primer compositions and the sealant evaluated are described in Example 1. One of the primer compositions contained no butanol and the other contained 10 percent by weight of butanol. The substrates evaluated were glass and aluminum.

The coating and evaluation procedures were identical to those described in Example 1, with the exception that time interval between application of the primer and the first layer of sealant was as listed in the accompanying Table 4. The percent cohesive failure for the panels that were immersed in water for 1 and 7 days are also recorded in Table 4.

Table 4

| Percent Cohesive Failure On Glass and Aluminum | | | | |
|---|---|---|---|---|
| Drying Time (Days) | 1 Day | 7 Days | 1 Day | 7 Days |
| | Water | Water | Water | Water |
| | 0% Butanol/10% Butanol | | | |
| | Substrate = Glass | | Substrate = Aluminum | |
| 1 | 5/90 | 0/0 | 0/90 | 0/90 |
| 2 | 0/80 | 0/75 | 80/100 | 80/100 |
| 3 | 5/100 | 0/50 | 80/100 | 80/100 |
| 5 | 60/100 | 1/100 | 100/100 | 50/100 |
| 7 | 50/100 | 10/100 | 60/100 | 100/100 |

Claims

1. In a composition comprising

(I) from 2 to 10 percent by weight of a tetraalkyl titanate of the formula $Ti(OR)_4$ or a mixture of at least two titanates corresponding to said formula, where R represents an alkyl radical containing from 1 to 12 carbon atoms,

(II) from 2 to 20 percent by weight of an orthosilicate of the general formula $Si(OR')_4$ or a mixture of two or more orthosilicates corresponding to said general formula, where $R'$ is selected from the group consisting of R and alkoxyalkyl radicals containing from 2 to 12 carbon atoms, and

8

(III) from 70 to 96 percent, based on the weight of said composition, of a non-reactive organic solvent,

the improvement comprising the presence in said solvent of from 2 to 25 weight percent, based on the weight of said composition, of an alcohol represented by the formula $R''OH$, where $R''$ represents an alkyl or an alkenyl radical containing from 4 to 20 carbon atoms.

2. In an improved method for adhering a cured silicone rubber to a substrate by coating said substrate with a primer composition, applying to the layer of primer composition a layer of curable elastomeric organosiloxane composition and curing said organosiloxane composition, the improvement comprising using as said primer composition a composition comprising

(I) from 2 to 10 percent by weight of a tetraalkyl titanate of the formula $Ti(OR)_4$ or a mixture of at least two titanates corresponding to said formula, where R represents an alkyl radical containing from 1 to 12 carbon atoms,

(II) from 2 to 20 percent by weight of an orthosilicate of the general formula $Si(OR')_4$ or a mixture of two or more orthosilicates corresponding to said general formula, where $R'$ is selected from the group consisting of R and alkoxyalkyl radicals containing from 2 to 12 carbon atoms, and

(III) from 70 to 96 percent, based on the weight of said composition, of a non-reactive organic solvent,

where said solvent contains from 2 to 25 weight percent, based on the weight of said composition, of an alcohol represented by the formula $R''OH$, where $R''$ represents an alkyl or an alkenyl radical containing from 4 to 20 carbon atoms.

9